# EUROPÄISCHE PATENTSCHRIFT

(11) **EP 2 725 142 B1**
(45) Veröffentlichungstag und Bekanntmachung des Hinweises auf die Patenterteilung: **30.12.2015**
(21) Anmeldenummer: 13004342.5
(22) Anmeldetag: 04.09.2013
(51) Int. Cl.: E02B 8/08, E02B 9/00

(54) **Fischdurchlass und Verfahren zum Betreiben eines Fischdurchlasses, Wasserkraftwerk mit einem solchen Fischdurchlass, sowie ein Bausatz mit einem solchen Fischdurchlass zum Nachrüsten eines Absperrbauwerks in einem Fließgewässer**
Fishway system and method for operating a fishway system, water power installation with such a fishway system, and kit with such a fishway system for retrofitting a dam-construction in a waterstream
Passe à poisson et procédé de fonctionnement de passe à poisson, centrale hydro-électrique avec cette passe à poisson, et kit avec cette passe à poisson pour rénovation d'une construction de barrage dans un courant d'eau

(30) Priorität: 23.10.2012 DE 102012020781
(43) Veröffentlichungstag der Anmeldung: 30.04.2014
(60) Teilanmeldung: 15003076.5
(73) Patentinhaber: Kraftwerk am Höllenstein AG, 94315 Straubing (DE)
(72) Erfinder: Fischer, Johann, 94234 Viechtach (DE)
(74) Vertreter: Schmidt, Steffen J.

(56) Entgegenhaltungen:
- BE-A6- 1 013 606
- DE-B- 1 130 766
- US-A1- 2004 108 731
- US-B1- 6 325 570

## Beschreibung

### Hintergrund

Es wird ein Fischdurchlass beschrieben, bei dem das zum Betrieb des Fischdurchlasses benötigte Wasser zur Energieerzeugung verwendet werden kann. Zudem wird ein Verfahren zum Betreiben des Fischdurchlasses beschrieben. Außerdem werden ein Wasserkraftwerk mit einem solchen Fischdurchlass, sowie ein Bausatz mit einem solchen Fischdurchlass zum Nachrüsten eines Absperrbauwerks in einem Fließgewässer beschrieben.

Bei der Nutzung von Wasserkraft besteht das Problem, dass die benötigten Absperrbauwerke für Fische und andere im Wasser lebende Organismen in der Regel unüberwindbare Hindernisse darstellen. Um Fischen dennoch die Überwindung derartiger Hindernisse zu ermöglichen, werden an Absperrbauwerken zwischen deren Oberwasserseite und deren Unterwasserseite Durchlässe zum Beispiel in Form von Fischtreppen oder Fischschleusen angebracht. Während bei einer Fischtreppe mehrere Becken stufenförmig hintereinander angeordnet sind, weist eine Fischschleuse in der Regel nur eine Kammer auf. Diese Kammer ist über verschließbare Öffnungen mit der Oberwasserseite und der Unterwasserseite des Absperrbauwerks verbunden. Durch abwechselndes Öffnen/Schließen der Öffnungen sowie kontrollierten Druckaufbau und Druckabbau können die Fische die Fischschleuse passieren.

Damit die Fische die zu bevorzugenden Passagen zwischen der Oberwasserseite und der Unterwasserseite auch als solche erkennen, muss den Fischen zumindest an den Ein- und Ausgängen der Passage eine diese Passage anzeigende Strömung (auch Leitströmung genannt) bereitgestellt werden. Die zum Bereitstellen dieser Strömung erforderliche Wassermenge, also das über den Durchlass während einer Zeiteinheit abfließende Wasservolumen, wird auch als Durchlassabfluss bezeichnet.

Da ein Fischdurchlass die Hauptturbine eines Wasserkraftwerks überbrückt, kann der Durchlassabfluss in der Regel nicht zur Energieerzeugung genutzt werden. Somit besteht der Interessenskonflikt, dass aus betriebswirtschaftlicher Sicht ein möglichst kleiner Durchlassabfluss vorteilhaft wäre, während aus ökologischer / fischwirtschäftlicher Sicht ein möglichst großer Durchlassabfluss vorteilhaft wäre.

Ausgehend von diesem Interessenskonflikt wird in Dokument DE 698 22 323 T2 ein schleusenartiger Fischdurchlass beschrieben. Bei diesem Fischdurchlass ist der Auslass einer Turbine derart angeordnet, dass das über die Turbine abfließende Wasser wahlweise in eine Druckkammer oder in ein, in Strömungsrichtung hinter der Druckkammer angeordnetes, Sammelbecken geleitet wird. Durch diese Anordnung kann die Lockströmung des Fischdurchlasses verstärkt werden. Das zum Betrieb des Fischdurchlasses benötigte Wasser kann allerdings nicht genutzt werden.

Im Einzelnen offenbart die DE 698 22 323 T2 eine Fischpassanlage, die einen schleusenartigen Fischpass enthält. Dieser Fischpass umfasst einen ersten Teil, von dem eine Verbindung in ein Unterwasser reicht, um Wasser durch diese Verbindung in das Unterwasser zu leiten und Fische in den ersten Teil zu locken sowie einen zweiten Teil, von dem eine Verbindung in ein Oberwasser reicht. Ein erstes Rohr zwischen dem ersten und dem zweiten Teil und Mittel um das erste Rohr oder die entsprechende Einrichtung zeitweise mit Wasser zu füllen dienen dazu, dass die Fische aus dem ersten Teil in den zweiten Teil und weiter in das Oberwasser gelangen können. Zwischen dem Oberwasser und dem ersten Teil ist ein zweites Rohr vorgesehen und darin eine Turbine angeordnet, um das Lockwasser dadurch zu leiten und die Energie aus dem Lockwasser auszunutzen. In dem ersten Teil des Fischpasses befindet sich ein in Verbindung mit dem Unterwasser befindliches Sammelbecken und einen Druckraum. Diese sind direkt mit dem ersten Rohr und durch eine verschließbare Öffnung mit dem Sammelbecken verbunden. Das Wasser kann aus dem zweiten Rohr entweder direkt in das Sammelbecken und dadurch in das Unterwasser oder in den Druckraum und weiter in den Sammelbecken und in das Unterwasser geleitet werden. Die Turbine liegt unterhalb der Unterwasserfläche liegt. Zwischen dem Druckraum und dem Saugraum befindet sich ein Rohr und darin liegt eine nach dem Saugraum gerichtete Düsen, um das Wasser während der Entleerungsphase, die auf die Füllung des Rohres folgt, aus dem Fischpass in den Saugraum zu leiten. Das Rohr enthält ein einstellbares Ventil.

### Problem

Daher besteht die Aufgabe einen - vorzugsweise an einem Wasserkraftwerk angeordneten - Fischdurchlass und ein Verfahren für dessen Betrieb bereitzustellen, wobei der Durchlassabfluss des Fischdurchlasses zumindest teilweise zum Turbinenantrieb genutzt werden soll.

### Vorgeschlagene Lösung

Zur Lösung dieser Aufgabe wird ein Fischdurchlass eines Absperrbauwerks eines Fließgewässers vorgeschlagen. Der Fischdurchlass umfasst eine Kammer, die eine erste und eine zweite verschließbare Öffnung aufweist, wobei die erste verschließbare Öffnung die Kammer mit einer Oberwasserseite des Absperrbauwerks verbindet und die zweite verschließbare Öffnung die Kammer mit einer Unterwasserseite des Absperrbauwerks verbindet. Der Fischdurchlass umfasst zudem eine Turbine mit einem Einlass und einem Auslass; einen ersten Einlauf, der die Oberwasserseite mit dem Einlass der Turbine verbindet; einen ersten Ablauf, der den Auslass der Turbine mit der Unterwasserseite verbindet; einen zweiten Einlauf, der die Kammer mit dem Einlass der Turbine verbindet; und eine erste Schalteinheit, die dazu eingerichtet ist, den zweiten Einlauf wahlweise kontrolliert freizugeben und zu sperren.

Bei diesem Fischdurchlass kann, wenn die Kammer über die erste verschließbare Öffnung mit der Oberwasserseite verbunden ist und die erste Schalteinheit den zweiten Einlauf freigibt, Wasser von der Oberwasserseite über die Kammer zur Turbine fließen. Der durch die Kammer strömende Durchlassabfluss erzeugt eine Strömung, die Fische aus der Kammer zur Oberwasserseite und / oder von der Oberwasserseite in die Kammer lockt. Da das in die Kammer fließende Wasser über die Turbine abfließt, kann der Durchlassabfluss zum Turbinenantrieb verwendet werden.

Außerdem wird ein Wasserkraftwerk vorgeschlagen, das ein in einem Fließgewässer angeordnetes Absperrbauwerk; zumindest eine Hauptturbine; und einen der Hauptturbine zugeordneten Generator umfasst. Zudem umfasst das Wasserkraftwerk einen Fischdurchlass mit einer Kammer, die eine erste und eine zweite verschließbare Öffnung aufweist, wobei die erste verschließbare Öffnung die Kammer mit einer Oberwasserseite des Absperrbauwerks verbindet und die zweite verschließbare Öffnung die Kammer mit einer Unterwasserseite des Absperrbauwerks verbindet; einer Turbine mit einem Einlass und einem Auslass; einem ersten Einlauf, der die Oberwasserseite mit dem Einlass der Turbine verbindet; einem ersten Ablauf, der den Auslass der Turbine mit der Unterwasserseite verbindet; einem zweiten Einlauf, der die Kammer mit dem Einlass der Turbine verbindet; und einer ersten Schalteinheit, die dazu eingerichtet ist, den zweiten Einlauf wahlweise kontrolliert freizugeben und zu sperren.

Ein weiterer Aspekt ist ein Verfahren zum Betreiben eines Fischdurchlasses eines Absperrbauwerks in einem Fließgewässer. Bei dem Verfahren wird in einem ersten Betriebszustand der Durchlassabfluss von einer Oberwasserseite eines Absperrbauwerks über eine Turbine in eine Kammer des Fischdurchlasses geleitet; in einem zweiten Betriebszustand wird der Durchlassabfluss von der Oberwasserseite über die Turbine zu der Unterwasserseite des Absperrbauwerks geleitet; und in einem dritten Betriebszustand wird der Durchlassabfluss von der Kammer über die Turbine zur Unterwasserseite geleitet.

Ferner wird ein Bausatz zum Nachrüsten eines Absperrbauwerks in einem Fließgewässer vorgeschlagen. Der Bausatz umfasst eine Turbine, die für einen Volumenstrom ausgelegt ist, der dem bereitzustellenden Durchlassabfluss entspricht; und zumindest eine Schalteinheit, die dazu eingerichtet ist, einen Einlauf oder Ablauf der Turbine wahlweise kontrolliert freizugeben oder zu sperren.

### Ausgestaltung und Eigenschaften

Der Fischdurchlass kann einen zweiten Ablauf aufweisen, der den Auslass der Turbine mit der Kammer verbindet, und kann eine zweite Schalteinheit aufweisen, die dazu eingerichtet ist, den zweiten Ablauf wahlweise kontrolliert freizugeben und zu sperren.

Über den zweiten Ablauf kann, wenn die zweite verschließbare Öffnung geöffnet ist und die zweite Schalteinheit den zweiten Ablauf freigibt, das von der Turbine abfließende Wasser über die Kammer zur Unterwasserseite geleitet werden. Der durch die Kammer fließende Durchlassabfluss erzeugt eine Strömung, die Fische aus der Kammer zur Unterwasserseite und / oder von der Unterwasserseite in die Kammer lockt. Da das in die Kammer fließende Wasser zuvor durch die Turbine geflossen ist, kann der zum Bereitstellen der Strömung benötigte Durchlassabfluss zur Energieerzeugung verwendet werden.

Die Querschnitte des ersten und des zweiten Einlaufs können einander entsprechen. Der zweite Einlauf kann für den gleichen Volumenstrom ausgelegt sein wie der erste Einlauf. Der erste Einlauf und der zweite Einlauf können derart angeordnet sein, dass der Wasserdruck am Einlass der Turbine im Wesentlichen konstant ist. So ist der Wasserdruck am Einlass der Turbine unabhängig davon, ob das Wasser über den ersten Einlauf oder über den zweiten Einlauf zur Turbine fließt. Im Wesentlichen konstant bedeutet, dass es nicht erforderlich ist, Betriebsparameter der Turbine, wie zum Beispiel die Anstellwinkel der Turbinenschaufeln oder der Turbinenflügel zu verändern. Der erste Einlauf und der zweite Einlauf können ungefähr auf gleicher Höhe angeordnet sein. Zudem können der erste und der zweite Einlauf derart gestaltet sein, dass der Druckabfall über den ersten und / oder den zweiten Einlauf im Wesentlichen gleich ist. Der erste Einlauf kann von einem Einlauf für die Hauptturbine abzweigen. Der erste Einlauf kann hinter einem Einlaufschutz, zum Beispiel einem Treibgutrechen, der Hauptturbine angeordnet sein. Dadurch kann auf einen separaten Einlaufschutz für den ersten Einlauf verzichtet werden.

Die Querschnitte des ersten und des zweiten Ablaufs können einander entsprechen. Der zweite Ablauf kann für den gleichen Volumenstrom ausgelegt sein wie der erste Ablauf. Der erste Ablauf und der zweite Ablauf können derart angeordnet sein, dass die Geschwindigkeit des Wassers am Auslass der Turbine im Wesentlichen konstant ist. Also die Geschwindigkeit am Auslass der Turbine unabhängig davon ist, ob das Wasser über den ersten Ablauf oder über den zweiten Ablauf zur Unterwasserseite fließt. Zudem können der erste und der zweite Ablauf derart ausgestaltet sein, dass eine Sogwirkung des ersten und des zweiten Ablaufs im Wesentlichen gleich ist.

Die erste und zweite verschließbare Öffnung der Kammer können durch ein erstes und ein zweites Tor geöffnet oder geschlossen werden. Die Kammer kann eine Schleusenkammer sein. Die Schleusenkammer kann dazu vorgesehen sein, Fische unter Umgehung der Hauptturbine eines Wasserkraftwerks von der Unterwasserseite zur Oberwasserseite und umgekehrt zu schleusen.

Ein Einstiegsbecken kann in Strömungsrichtung hinter der Kammer angeordnet sein. Das Einstiegsbecken kann durch die zweite verschließbare Öffnung von der Kammer getrennt sein. Der erste Ablauf kann in das Einstiegsbecken münden. Durch das Einstiegsbecken kann das über den ersten Ablauf und über den zweiten Ablauf abfließende Wasser wieder zusammengeführt werden.

Die erste Schalteinheit kann eine Ventilanordnung sein, die wahlweise den ersten Einlauf oder den zweiten Einlauf kontrolliert freigibt und sperrt. Die zweite Schalteinheit kann eine Ventilanordnung sein, die wahlweise den ersten Ablauf oder den zweiten Ablauf kontrolliert freigibt und sperrt. Die Ventilanordnung kann zum Beispiel ein 3/2 Wegeventil sein, das die Turbine wahlweise mit dem ersten oder dem zweiten Einlauf verbindet oder die Turbine wahlweise mit dem ersten oder dem zweiten Ablauf verbindet. Ferner kann die erste und / oder die zweite Schalteinheit zumindest einen Absperrschieber umfassen. Für den ersten und zweiten Einlauf sowie den ersten und zweiten Ablauf kann jeweils ein Absperrschieber vorgesehen sein. Die den ersten und zweiten Einlauf zugeordneten Absperrschieber sowie die den ersten und zweiten Ablauf zugeordneten Absperrschieber können unabhängig voneinander betätigt werden.

Die erste und / oder die zweite Schalteinheit können dazu eingerichtet sein, dass ein Sperren eines Einlaufs oder Ablaufs ein Freigeben des anderen Einlaufs oder Ablaufs bewirkt. Dabei kann der eine Einlauf oder Ablauf in dem Maß gesperrt werden, in dem der andere Einlauf oder Ablauf freigegeben wird. Die erste und / oder die zweite Schaltvorrichtung kann dazu eingerichtet sein, dass durch einen Umschaltvorgang der durch die Schalteinheit fließende Volumenstrom im Wesentlichen nicht reduziert wird.

Der über die Turbine fließende Volumenstrom kann einem bereitzustellenden Durchlassabfluss entsprechen. Zum Beispiel kann der über die Turbine fließende Volumenstrom kleiner als 10% des über das Absperrbauwerk abfließenden Gesamtabflusses sein. In einem Ausführungsbeispiel kann der über die Turbine fließende Volumenstrom kleiner als 5% des Gesamtabflusses sein. In einem weiteren Ausführungsbeispiel kann der über die Turbine fließende Volumenstrom in einem Bereich von 3% bis 0,5% des Gesamtabflusses liegen. Ferner kann der über die Turbine fließende Volumenstrom kleiner als 5% des über die zumindest eine Hauptturbine des Wasserkraftwerks fließenden Volumenstroms sein. Der über die Turbine fließende Volumenstrom kann in einem Bereich von 3% bis 0,5% des über die zumindest eine Hauptturbine des Wasserkraftwerks fließenden Volumenstroms sein.

Der Fischdurchlass kann eine Steuereinheit aufweisen, die dazu eingerichtet ist, der ersten und zweiten verschließbaren Öffnung und der ersten und zweiten Schalteinheit Schaltzustände vorzugeben. Die Steuereinheit kann der ersten Schalteinheit einen Schaltzustand vorgeben, bei dem der zweite Einlauf geöffnet ist, wenn die erste verschließbare Öffnung geöffnet ist und die zweite verschließbare Öffnung geschlossen ist. Zudem kann die Steuereinheit der ersten Schalteinheit einen Schaltzustand vorgeben, bei dem der erste Einlauf gesperrt ist, wenn der zweite Einlauf freigegeben ist. Die Steuereinheit kann der zweiten Schalteinheit einen Schaltzustand vorgeben, bei dem der zweite Ablauf geöffnet ist, wenn die erste verschließbare Öffnung geschlossen ist und die zweite verschließbare Öffnung geöffnet ist. Die Steuereinheit kann der zweiten Schalteinheit einen Schaltzustand vorgeben, bei dem der erste Ablauf gesperrt ist, wenn der zweite Ablauf freigegeben ist. Zudem kann die Steuereinheit dazu eingerichtet sein, Schiebern einer Druckaufbauleitung oder einer Druckabbauleitung Schaltzustände vorzugeben. Also einen Druckaufbau oder einen Druckabbau in der Kammer zu steuern.

Die Kammer kann Teil eines Grundablasses des Absperrbauwerks sein. Ebenso kann die Kammer in einer aufgelassenen Turbinenkammer eines Wasserkraftwerks angeordnet sein. Zudem kann die Kammer teilweise oder vollständig unterhalb der Wasseroberfläche der Unterwasserseite angeordnet sein. Die Kammer kann einen Aufstiegsschacht umfassen oder über die erste verschließbare Öffnung mit einem Aufstiegsschacht verbunden sein. Die Kammer kann Teil des Absperrbauwerks sein oder kann separat von dem Absperrbauwerk angeordnet sein. Falls die Kammer separat von dem Absperrbauwerk angeordnet ist, kann die Kammer über einen Verbindungskanal und / oder über einen Aufstiegsschacht mit der Oberwasserseite verbunden sein.

Bei dem Verfahren zum Betreiben des Fischdurchlasses kann im ersten Betriebszustand die Kammer mit der Unterwasserseite verbunden sein. Zudem kann die erste verschließbare Öffnung geschlossen sein. Im ersten Betriebszustand können Fische von der Unterwasserseite in die Kammer schwimmen. Im zweiten Betriebszustand können die erste und die zweite verschließbare Öffnung verschlossen sein. Im zweiten Betriebszustand kann in der Kammer ein Druckaufbau erfolgen. Im dritten Betriebszustand kann die Kammer mit der Oberwasserseite verbunden sein. Zudem kann die zweite verschließbare Öffnung geschlossen sein. Im dritten Betriebszustand können die Fische aus der Kammer zur Oberwasserseite schwimmen. Im vierten Betriebszustand können die erste und die zweite verschließbare Öffnung verschlossen sein. Im vierten Zustand kann ein Druckabbau erfolgen.

### Kurzbeschreibung der Zeichnungen

Weitere Ziele, Merkmale, Vorteile und Anwendungsmöglichkeiten ergeben sich aus der nachfolgenden Beschreibung von nicht einschränkend zu verstehenden Ausführungsbeispielen und den zugehörigen Zeichnungen.
Fig. 1 zeigt eine schematische Darstellung eines Absperrbauwerks mit einem Wasserkraftwerk;
Fig. 2 zeigt eine vereinfachte schematische Darstellung eines Fischdurchlasses in einem ersten Betriebszustand;
Fig. 3 zeigt die vereinfachte schematische Darstellung des Fischdurchlasses in einem zweiten Betriebszustand;
Fig. 4 zeigt die vereinfachte schematische Darstellung des Fischdurchlasses in einem dritten Betriebszustand;
Fig. 5 zeigt die vereinfachte schematische Darstellung des Fischdurchlasses in einem vierten Betriebszustand;
Fig. 6 zeigt eine schematische Darstellung eines Ausführungsbeispiels eines Fischdurchlasses; und
Fig. 7 zeigt eine schematische Draufsicht auf eine Kammer eines Fischdurchlasses.

### Detaillierte Beschreibung von Ausführungsbeispielen

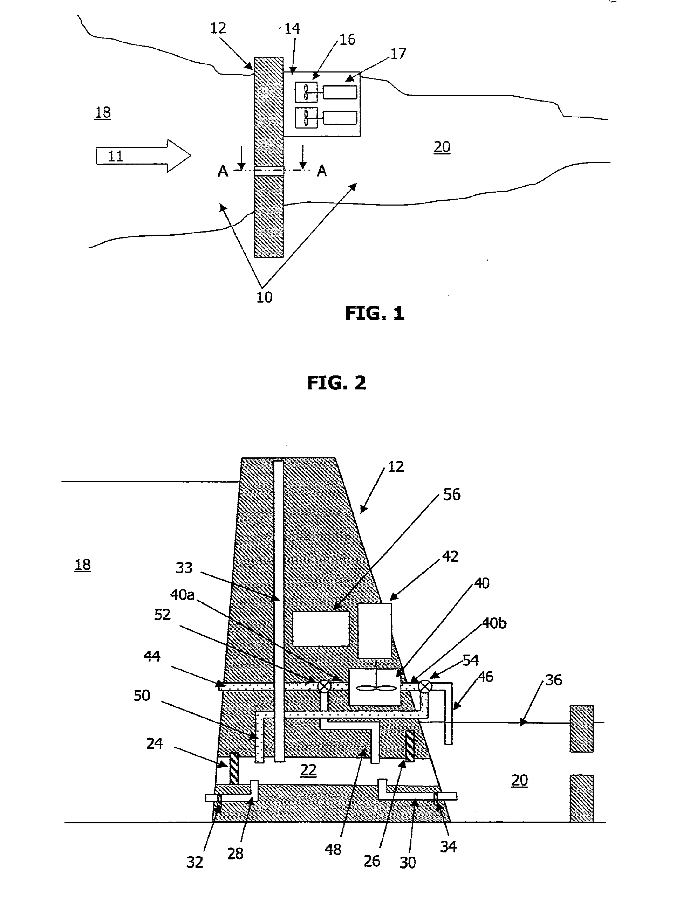

Fig. 1 ist eine schematische Darstellung eines Gewässers 10 mit einem Absperrbauwerk 12. Die Fließrichtung des Gewässers 10 ist durch den Pfeil 11 dargestellt. Das Absperrbauwerk 12 kann zum Beispiel eine Talsperre, eine Staumauer oder ein Wehr sein. Das Absperrbauwerk 12 kann Teil einer Schleuse, oder so wie in Fig. 1 dargestellt, Teil eines Wasserkraftwerks 14 sein. Das Wasserkraftwerk 14 umfasst zumindest eine Hauptturbine 16, die in Verbindung mit Generatoren 17 das von der Oberwasserseite 18 zur Unterwasserseite 20 abfließende Wasser zur Erzeugung elektrischer Energie nutzt.

Fig. 2 ist eine schematische Darstellung eines Querschnitts des Absperrbauwerks 12 entlang der in Fig. 1 dargestellten Linie AA. Dieser Querschnitt zeigt einen Fischdurchlass, der die Oberwasserseite 18 des Absperrbauwerks 12 mit der Unterwasserseite 20 des Absperrbauwerks 12 verbindet. In mehreren Schritten können Fische und andere im Wasser lebende Organismen den Fischdurchlass passieren, so dass die Durchgängigkeit des Gewässers 10 erhalten bleibt. Das durch den Fischdurchlass abfließende Wasser wird nachstehend als Durchlassabfluss bezeichnet.

Der Fischdurchlass umfasst eine Kammer 22, die in Richtung Oberwasserseite 18 durch ein erstes Tor 24 und in Richtung Unterwasserseite 20 durch ein zweites Tor 26 verschlossen werden kann. Das erste und zweite Tor 24, 26 weisen jeweils einen, nicht dargestellten, Antrieb auf. Durch die Antriebe können das erste und das zweite Tor 24, 26 geöffnet oder geschlossen werden, wobei im geöffneten Zustand Fische in die Kammer oder aus der Kammer schwimmen können. Zudem sind die Tore im geöffneten Zustand zumindest so weit geöffnet, dass der Durchlassabfluss in die Kammer 22 und / oder aus der Kammer 22 fließen kann.

Die in Fig. 2 dargestellte Kammer 22 führt durch das Absperrbauwerk 12 und bildet somit einen Bypass für die Hauptturbine 16 des Absperrbauwerks 12. Die Wände der Kammer 22 können zum Beispiel aus Mauerwerk und / oder Beton bestehen und Teil der Bausubstanz des Absperrbauwerks 12 sein. Zudem können die Wände der Kammer 22 teilweise oder vollständig aus Metall, zum Beispiel aus Stahl, bestehen. Zum Beispiel kann ein Grundablass des Absperrbauwerks derart umgebaut werden, dass die Kammer 22 in dem Grundablass aufgenommen ist. Die Kammer 22 kann aber auch in einer aufgelassenen Turbinenkammer eines Wasserkraftwerks 14 angeordnet sein, also in einem Raum in dem ursprünglich eine der Hauptturbinen 16 des Wasserkraftwerks 14 angeordnet war. Die Kammer 22 und die Tore 24, 26 können aber auch speziell als Fischdurchlass konzipiert sein.

Die Kammer 22 kann zum Beispiel rohrförmig sein. Zudem kann die Kammer 22, so wie in Fig. 2 dargestellt, im Wesentlichen horizontal angeordnet sein. Neben einer horizontalen Anordnung der Kammer 22 sind auch schräge Anordnungen oder Mischformen möglich. Bei dem in Fig. 2 dargestellten Fischdurchlass ist die Kammer 22 vollständig unterhalb der Wasseroberfläche der Unterwasserseite 20 angeordnet. Ebenso kann die Kammer 22 eine nach oben offene Kammer sein oder zumindest ein Teil der Kammer 22 kann nach oben offen sein. Die Ausführung der Kammer 22 sowie des ersten und des zweiten Tores 24, 26 hängt von den jeweiligen Gegebenheiten des Absperrbauwerks 12 ab.

Es ist eine Druckaufbauleitung 28 vorgesehen, die die Oberwasserseite 18 mit der Kammer 22 verbindet. Die Druckaufbauleitung 28 ist dazu eingerichtet, bei geschlossenen Toren 24, 26, den Wasserdruck in der Kammer 22 langsam an den oberwasserseitigen Wasserdruck anzugleichen. Die Druckaufbauleitung 28 kann durch einen ersten Schieber 32 gesperrt werden. Es ist eine Druckabbauleitung 30 vorgesehen, die die Kammer 22 mit der Unterwasserseite 20 verbindet. Die Druckabbauleitung 30 kann dazu eingerichtet sein, bei geschlossenen Toren 24, 26, den Wasserdruck in der Kammer 22 langsam an den unterwasserseitigen Wasserdruck anzugleichen. Die Druckaufbauleitung 30 kann durch einen zweiten Schieber 34 gesperrt werden. Zudem kann der erste und der zweite Schieber 32, 34 dazu vorgesehen sein, die Geschwindigkeit des Druckabbaus und des Druckaufbaus einzustellen.

Bei dem in Fig. 2 dargestellten Ausführungsbeispiel ist ein vertikal angeordnetes Rohr 33 vorgesehen. Die Höhe des Rohres 33 entspricht mindestens der Wasseroberfläche auf der Oberwasserseite 18. Das Rohr 33 ist nach oben offen, so dass der Wasserstand im Rohr 33 in Abhängigkeit von dem in der Kammer 22 anliegenden Wasserdruck schwanken kann. Wenn der Schieber 32 der Druckaufbauleitung 28 geöffnet ist, wird die von der Oberwasserseite 18 zur Kammer 22 fließende Wassermenge in dem Rohr 33 aufgenommen. Wenn der Wasserstand im vertikalen Rohr 33 dem Wasserstand auf der Oberwasserseite 18 entspricht, ist der Druckausgleich zur Oberwasserseite 18 erfolgt und das erste Tor 24 kann geöffnet werden. Wenn der Schieber 34 der Druckabbauleitung 30 geöffnet ist, fließt die in dem vertikalen Rohr 33 aufgenommene Wassermenge zur Unterwasserseite 20. Wenn der Wasserstand in dem vertikalen Rohr 33 dem Wasserstand auf der Unterwasserseite 20 entspricht, ist der Druckausgleich zur Unterwasserseite 20 erfolgt und das zweite Tor 26 kann geöffnet werden.

Auf der Unterwasserseite 18 ist ein Einstiegsbecken 36 vorgesehen. Das Einstiegsbecken 36 ist ein abgegrenzter Bereich über den der zum Betrieb des Fischdurchlasses benötigte Durchlassabfluss zur Unterwasserseite 20 abfließt. Dazu weist das Einstiegsbecken zumindest eine Öffnung in Richtung Unterwasserseite auf. Diese Öffnung kann derart angeordnet sein, dass Fische diese einfach auffinden können. Das Einstiegsbecken 36 ist in Strömungsrichtung hinter der Kammer 22 angeordnet. Durch den Durchlassabfluss werden flussaufwärts wandernde Fische angelockt. Die angelockten Fische sammeln sich im Einstiegsbecken 36 und warten darauf, den Fischdurchlass in Richtung Oberwasserseite 18 zu passieren. Auch auf der Oberwasserseite 18 kann ein Einstiegsbecken vorgesehen sein, um den Fischen das Auffinden und Passieren des Durchlasses zu erleichtern. Das auf der Oberwasserseite 18 vorgesehene Einstiegsbecken kann zum Beispiel als Aufstiegsschacht ausgeführt sein. Der Aufstiegsschacht kann zudem dazu vorgesehen sein, die Kammer 22 mit der Oberwasserseite 18 zu verbinden, wenn dies wegen der örtlichen Gegebenheiten erforderlich ist. Zum Beispiel wenn die Kammer 22 außerhalb des Absperrbauwerks 12 angeordnet ist oder die Kammer 22 unterhalb der Oberwassersohle angeordnet ist. Der Durchlassabfluss kann dabei durch den Aufstiegsschacht fließen.

Der Fischdurchlass umfasst eine Turbine 40. Das über die Turbine 40 von der Oberwasserseite 18 zur Unterwasserseite 20 abfließende Wasser treibt diese an. Über die Turbine 40 kann weniger Wasser abfließen, als über die zumindest eine Hauptturbine 16 des Wasserkraftwerks 14. Somit kann die Turbine 40 kleiner als die Hauptturbine 16 des Wasserkraftwerks 14 sein. Der über die Turbine 40 fließende Volumenstrom kann kleiner als 10% des über die zumindest eine Hauptturbine 16 fließenden Volumenstroms sein. Der über die Turbine 40 fließende Volumenstrom kann kleiner als 5% des über die zumindest eine Hauptturbine 16 fließenden Volumenstroms sein. Der Volumenstrom der Turbine 40 kann zum Beispiel in einem Bereich von 3% bis 0,5% des Volumenstroms der zumindest einen Hauptturbine 16 liegen. In einem speziellen Ausführungsbeispiel kann der über die Turbine 40 fließende Volumenstrom ungefähr 500 l/s betragen. Ferner kann die Turbine 40 die einzige Turbine eines Wasserkraftwerks sein. Dies kann zum Beispiel dann der Fall sein, wenn der Gesamtabfluss des Fließgewässers so gering ist, dass der Einsatz einer zusätzlichen Turbine wirtschaftlich nicht rentabel wäre. Der über die Turbine 40 fließende Volumenstrom entspricht im Wesentlichen dem Durchlassabfluss. Die Turbine 40 kann zum Beispiel eine Rohrturbine, eine Durchströmturbine oder eine als Turbine betriebene Pumpe, beispielsweise eine Kreiselpumpe, sein. Die Bewegungsenergie der Turbine 40 wird dann von einem Generator 42 in nutzbare Energie, zum Beispiel elektrische Energie, umwandelt.

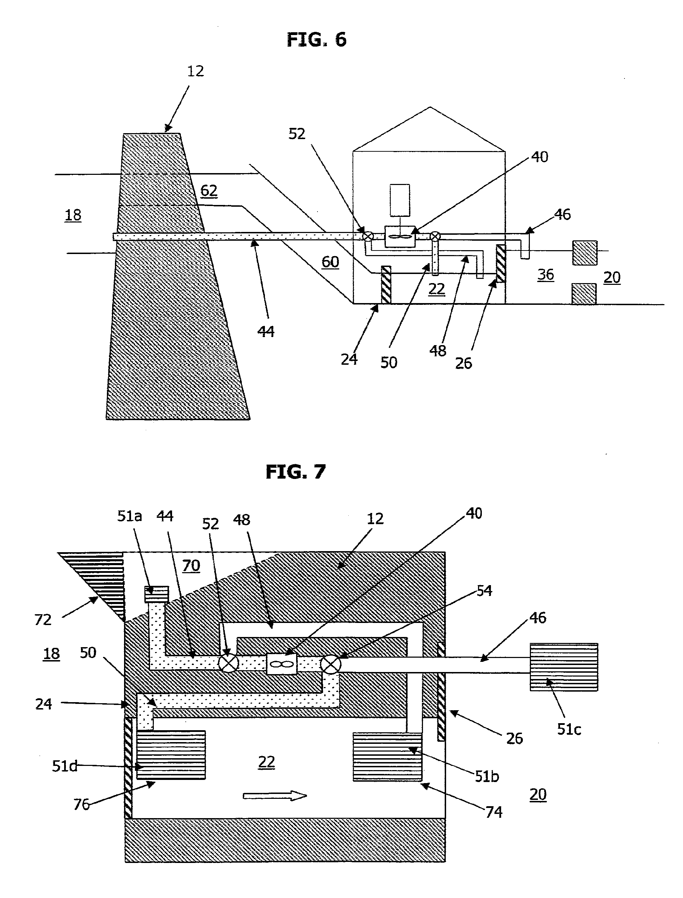

Der Einlass 40a der Turbine 40 ist über einen ersten Einlauf 44 mit der Oberwasserseite 18 verbunden. Der erste Einlauf 44 kann zum Beispiel von einem Haupteinlauf 70 eines Wasserkraftwerks 14, also einem Einlauf für die Hauptturbine 16, abzweigen. Das Abzweigen des ersten Einlasses kann nach einem Einlaufschutz 72 erfolgen, so dass der Turbine 40 von Treibgut gereinigtes Wasser zugeführt werden kann. Der Einlaufschutz 72 kann zum Beispiel ein Treibgutrechen sein. Dies ist in Fig. 7 dargestellt.

Der Auslass 40b der Turbine 40 ist über einen ersten Ablauf 46 mit der Unterwasserseite 20 verbunden. Der erste Ablauf 46 mündet in das Einstiegsbecken 36. Zudem ist ein zweiter Einlauf 48 vorgesehen, der die Kammer 22 mit der Turbine 40 verbindet. Das in die Kammer 22 mündende Ende des zweiten Einlaufs 48 ist in Strömungsrichtung im hinteren Bereich der Kammer 22 angeordnet. Es ist ein zweiter Ablauf 50 vorgesehen, der die Turbine 40 mit der Kammer 22 verbindet. Das in die Kammer 22 mündende Ende des zweiten Ablaufs 50 ist in Strömungsrichtung im vorderen Bereich der Kammer 22 angeordnet. Somit kann das zum Betrieb der Turbine 40 benötigte Wasser über den ersten und / oder den zweiten Einlauf 44, 48 zugeleitet werden und über den ersten und / oder den zweiten Ablauf 46, 50 abgeleitet werden. Der Querschnitt des Auslasses 40b der Turbine 40, sowie die Querschnitte des ersten und / oder zweiten Ablaufs 46, 50 können zur Unterwasserseite 20 hin zunehmen. Durch die zur Unterwasserseite 20 hin gerichtete Querschnittsvergrößerung in dem ersten und zweiten Ablauf 46, 50 kann eine Sogwirkung erzielt werden.

An den Einläufen 44, 48 können Reinigungseinheiten 51a, 51b in Form von Gittern, Netzen oder Rechen angeordnet sein. Die Reinigungseinheiten 51a, 51b schützen die Turbine 40 vor Treibgut. Zudem kann durch die Reinigungseinheiten 51a, 51b verhindert werden, dass Fische in die Einläufe schwimmen. Bei Ausführungsbeispielen, bei denen der erste Einlauf 44 von einem Haupteinlauf 70 eines Wasserkraftwerks 14 abzweigt, kann für den ersten Einlauf 44 auf eine separate Reinigungseinheit 51a verzichtet werden. Die Reinigungseinheiten 51a, 51b können zum Beispiel Feinrechen sein. Feinrechen sind Rechen deren Öffnungsweite weniger als 20 mm, und zum Beispiel 15 mm, beträgt. Der erste und zweite Einlauf 44, 48 können derart dimensioniert sein, dass an den Reinigungseinheiten 51a, 51b nur geringe Strömungsgeschwindigkeiten auftreten. Das in der Kammer 22 angeordnete Ende des zweiten Einlaufs 48 kann dazu eingerichtet sein, dass die Strömungsgeschwindigkeit im Bereich der Reinigungseinheit 51b kleiner als 2 m/s ist. Ferner kann der zweite Einlauf 48 dazu eingerichtet sein, dass die Strömungsgeschwindigkeit im Bereich der Reinigungseinheit 51b kleiner als 1 m/s ist. In einem speziellen Ausführungsbeispiel kann die Strömungsgeschwindigkeit im Bereich der Reinigungseinheit 51b ungefähr 0,5 m/s betragen.

Auch an dem ersten und dem zweiten Ablauf 46, 50 können Gitter, Netze oder Rechen angebracht sein, um zu verhindern dass Fische in den ersten und / oder den zweiten Ablauf 46, 50 schwimmen. Die an den ersten und zweiten Ablauf 46, 50 angebrachten Rechen können den Reinigungseinheiten 51a, 51b der Einläufe 44, 48 entsprechen und werden auch als Reinigungseinheiten 51c, 51d bezeichnet. Das in der Kammer 22 angeordnete Ende des zweiten Ablaufs 50 kann dazu eingerichtet sein, dass die Strömungsgeschwindigkeit im Bereich der Reinigungseinheit 51d kleiner als 3 m/s ist. Ferner kann der zweite Ablauf 50 dazu eingerichtet sein, dass die Strömungsgeschwindigkeit im Bereich der Reinigungseinheit 51d kleiner als 2 m/s ist. Die Reinigungseinheiten 51a-51d für die Einläufe 44, 48 und die Abläufe 46, 50 können derart angeordnet sein, dass sie durch das im Betrieb des Fischdurchlasses vorbeiströmende Wasser gereinigt werden. So kann zum Beispiel die dem zweiten Einlauf 48 zugeordnete Reinigungseinheit 51b, wenn das Wasser über den ersten Einlauf 44 zur Turbine 40 und durch den zweiten Ablauf 50 in die Kammer 22 geleitet wird, von dem durch die Kammer 22 fließenden Durchlassabfluss gereinigt werden.

Zum Beispiel können die Reinigungseinheiten 51a-51d eine im Wesentlichen ebene Fläche definieren. Diese ebene Fläche kann im Wesentlichen parallel zur Strömungsrichtung angeordnet sein. Falls ein Rechen als Reinigungseinheit 51 vorgesehen ist, können die Stäbe des Rechens im Wesentlichen parallel zur Strömungsrichtung angeordnet sein. Der Begriff parallel zur Strömungsrichtung bezieht sich dabei auf die Strömung, die sich einstellt, wenn der Durchlassabfluss nicht durch den jeweiligen Einlauf oder Ablauf fließt. Dies ist in Fig. 7 dargestellt, wobei in der Fig. 7 die Reinigungseinheiten 51b, 51d in Draufsicht dargestellt sind. Die Strömungsrichtung ist durch den Pfeil angedeutet. Bei dem in Fig. 7 dargestellten Betriebszustand fließt das Wasser aus dem zweiten Ablauf 50 in die Kammer 22 und fließt an den parallel zur Strömungsrichtung angeordneten Stäben des Rechens vorbei.

Für den ersten Einlauf 44 und / oder dem zweiten Einlauf 48 kann eine Rückspülung vorgesehen sein. Bei einer Rückspülung wird der normale Wasserfluss umgekehrt, so dass Wasser über den ersten und / oder den zweiten Einlauf 44, 48 abfließen kann. Durch die Umkehr der Strömungsrichtung können an den Reinigungseinheiten 51a, 51b haftende Verschmutzungen von den Reinigungseinheiten 51a, 51b gespült werden. Bei der Rückspülung kann zum Beispiel das über einen der Einläufe zugeführte Wasser über den anderen Einlauf abfließen. Ebenso kann die Turbine 40 kurzzeitig als Pumpe betrieben werden, so dass Wasser an einem der Abläufe 46, 50 angesaugt wird und über einen der Einläufe 44, 50 abfließt.

Es ist eine erste Schalteinheit 52 vorgesehen. Die erste Schalteinheit 52 ist dazu eingerichtet, den zweiten Einlauf 48 wahlweise kontrolliert freizugeben und zu sperren. Die in Fig. 2 dargestellte erste Schalteinheit 52 ist zudem dazu eingerichtet, den ersten Einlauf 44 wahlweise kontrolliert freizugeben und zu sperren. Die erste Schalteinheit 52 kann zum Beispiel eine Ventilanordnung sein, die wahlweise den ersten Einlauf 44 oder den zweiten Einlauf 48 sperrt. In einem Ausführungsbeispiel kann die erste Schalteinheit 52 ein 3/2 Wegeventil oder ein 3/3 Wegeventil sein, wobei ein erster Anschluss des Ventils mit dem ersten Einlauf 44, ein zweiter Anschluss des Ventils mit dem zweiten Einlauf 48 und ein dritter Anschluss des Ventils mit dem Einlass 40a der Turbine 40 verbunden ist. In einem ersten Schaltzustand kann das Ventil den zweiten Einlauf 48 sperren und den ersten Einlauf 44 mit dem Einlass 40a der Turbine 40 verbinden. In einem zweiten Schaltzustand kann das Ventil den ersten Einlauf 44 sperren und den zweiten Einlauf 48 mit dem Einlass 40a der Turbine 40 verbinden. In einem optionalen dritten Schaltzustand kann das Ventil den ersten und zweiten Einlauf 44, 48 sperren. Es ist aber auch möglich, den ersten und zweiten Einlauf 44, 48 mit separaten Anordnungen, zum Beispiel mit separaten Absperrschiebern, unabhängig voneinander zu sperren. Die zweite Schalteinheit 54 kann zum Beispiel zumindest einen Absperrschieber umfassen.

Es ist eine zweite Schalteinheit 54 vorgesehen. Die zweite Schalteinheit 54, ist dazu eingerichtet, den zweiten Ablauf 50 wahlweise kontrolliert freizugeben und zu sperren. Die in Fig. 2 dargestellte zweite Schalteinheit 54 ist zudem dazu eingerichtet, den ersten Ablauf 46 wahlweise kontrolliert freizugeben und zu sperren. Die zweite Schalteinheit 54 kann zum Beispiel eine Ventilanordnung sein, die wahlweise den ersten Ablauf 46 oder den zweiten Ablauf 50 sperrt. In einem Ausführungsbeispiel kann die zweite Schalteinheit 54 ein 3/2 Wegeventil oder ein 3/3 Wegeventil sein, wobei ein erster Anschluss des Ventils mit dem ersten Ablauf 46, ein zweiter Anschluss des Ventils mit dem zweiten Ablauf 50 und ein dritter Anschluss des Ventils mit dem Auslass 40b der Turbine 40 verbunden ist. In einem ersten Schaltzustand kann das Ventil den zweiten Ablauf 50 sperren und den ersten Ablauf 46 mit dem Auslass 40b der Turbine 40 verbinden. In einem zweiten Schaltzustand kann das Ventil den ersten Ablauf 46 sperren und den zweiten Ablauf 50 mit dem Auslass 40b der Turbine 40 verbinden. In einem optionalen dritten Schaltzustand kann das Ventil den ersten und zweiten Ablauf 46, 50 sperren. Es ist aber auch möglich, den ersten und den zweiten Ablauf 46, 50 mit separaten Anordnungen, zum Beispiel mit separaten Absperrschiebern, unabhängig voneinander zu sperren. Die erste Schalteinheit 52 kann zum Beispiel zumindest einen Absperrschieber umfassen.

Zudem ist eine Steuereinheit 56 vorgesehen, die dazu eingerichtet ist, den Betrieb des Fischdurchlasses zu steuern. So kann die Steuereinheit 56 dem Fischdurchlass Betriebszustände vorgeben. Die Steuereinheit 56 ist über nicht dargestellte Leitungen mit dem ersten und dem zweiten Tor 24, 26, dem ersten und dem zweiten Schieber 32, 34 sowie der ersten und der zweiten Schalteinheit 52, 54 verbunden. Über Steuerbefehle kann die Steuereinheit 56 den Öffnungszustand des ersten und des zweiten Tores 24, 26 sowie des ersten und des zweiten Schiebers 32, 34 vorgeben. Zudem kann die Steuereinheit 56 der ersten und der zweiten Schalteinheit 52, 54 Schaltzustände vorgeben, wobei die von der Steuereinheit 56 vorgegebenen Schalt- und Öffnungszustände den in den Fig. 2 -5 dargestellten Betriebszuständen entsprechen. Zudem kann die Steuereinheit 56 den Betreib der Turbine 40 und / oder des Generators 42 steuern.

Um den Weg des abfließenden Wassers in den jeweiligen Betriebszuständen zu verdeutlichen, sind in den Fig. 2 - 7 die durchströmten Ein- und Abläufe 44, 46, 48, 50 gepunktet dargestellt.

In Fig. 2 ist ein erster Betriebszustand des Fischdurchlasses dargestellt. Im ersten Betriebszustand ist das erste Tor 24 geschlossen und das zweite Tor 26 geöffnet. Die Turbine 40 ist über den ersten Einlauf 44 mit der Oberwasserseite 18 und über den zweiten Ablauf 50 mit der Kammer 22 verbunden. Da die Kammer 22 über das geöffnete zweite Tor 26 mit der Unterwasserseite 20 verbunden ist, liegt in der Kammer 22 im Wesentlichen der gleiche Druck wie auf der Unterwasserseite 20 an. Somit kann der Druckunterschied zwischen der Oberwasserseite 18 und der Kammer 22 von der Turbine 40 genutzt werden, um den Generator 42 anzutreiben. Da das erste Tor 24 geschlossen ist, fließt der Durchlassabfluss vollständig über die Turbine 40 und kann somit zur Energieerzeugung verwendet werden. Das über die Turbine 40 zur Kammer 22 fließende Wasser fließt ungehindert über das Einstiegsbecken 36 zur Unterwasserseite 20 ab. Dies bewirkt, dass für die Fische eine Strömung bereitgestellt wird, die im Wesentlichen die gesamte Kammer 22 und das nachgeordnete Einstiegsbecken 36 durchströmt. Dadurch werden Fische angelockt und schwimmen über das Einstiegsbecken 36 in die Kammer 22.

Die Steuereinheit 56 kann den Fischdurchlass von dem ersten Betriebszustand in einen zweiten Betriebszustand überführen. Dazu kann die Steuereinheit 56 das zweite Tor 26 und die zweite Schalteinheit 54 derart ansteuern, dass sich das zweite Tor 26 schließt und die zweite Schalteinheit 54 den ersten Ablauf 46 freigibt und den zweiten Ablauf 50 sperrt. Zudem wird der Schieber 32 der Druckaufbauleitung 28 geöffnet.

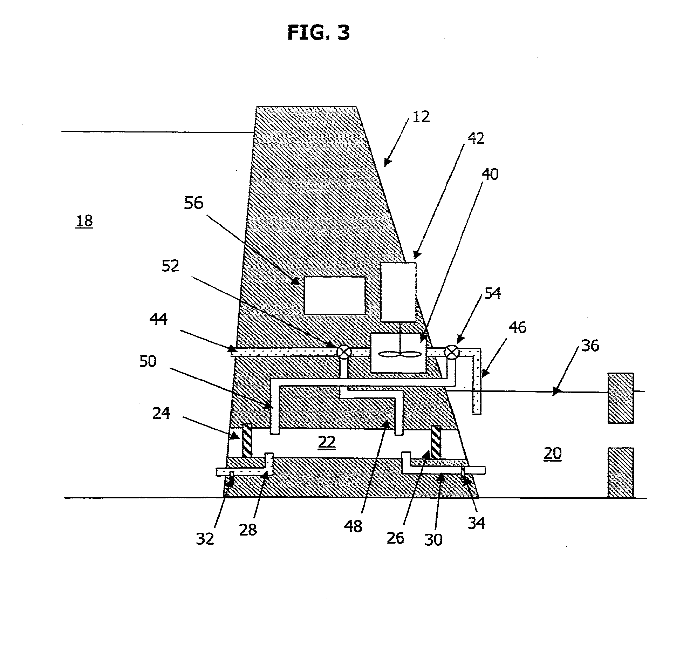

Der zweite Betriebszustand des Fischdurchlasses ist in Fig. 3 dargestellt. In diesem Betriebszustand sind das erste und das zweite Tor 24, 26 geschlossen. Der erste Schieber 32 ist teilweise oder vollständig geöffnet. Wegen der Druckdifferenz wird Wasser über die Druckaufbauleitung 28 in die Kammer 22 gedrückt. Das in die Kammer 22 gedrückte Wasser bewirkt einen langsamen Druckaufbau in der Kammer 22. Dabei steigt der Wasserstand in dem vertikalen Rohr 33. Durch den langsamen Druckaufbau können sich die Fische, die während des ersten Betriebszustands in die Kammer 22 geschwommen sind, an das Druckniveau der Oberwasserseite 18 gewöhnen. Die Dauer des Druckaufbaus kann durch die Druckänderungsgeschwindigkeit bestimmt werden. Zum Beispiel kann die Druckänderungsgeschwindigkeit in einem Bereich zwischen 0,3 bar/min und 0,2 bar/min liegen.

Im zweiten Betriebszustand ist die Turbine 40 über den ersten Einlauf 44 mit der Oberwasserseite 18 und über den ersten Ablauf 46 mit der Unterwasserseite 20 verbunden. Der Durchlassabfluss wird somit an der Kammer 22 vorbeigeleitet. Während in der Kammer 22 der Druckaufbau erfolgt, wird von der Turbine 40 und dem Generator 42 elektrische Energie erzeugt. Zudem lockt der durch den ersten Ablauf 46 in das Einstiegsbecken 36 abfließende Durchlassabfluss Fische an.

Sobald in der Kammer 22 das gleiche Druckniveau herrscht wie auf der Oberwasserseite 18, kann die Steuereinheit 56 den Fischdurchlass in einen dritten Betriebszustand überführen. Dazu kann die Steuereinheit 56 das erste Tor 24 und die erste Schalteinheit 52 derart ansteuern, dass sich das erste Tor 24 öffnet und die erste Schalteinheit 54 den zweiten Einlauf 48 freigibt und den ersten Einlauf 44 sperrt. Zudem wird der Schieber 32 der Druckaufbauleitung 28 geschlossen.

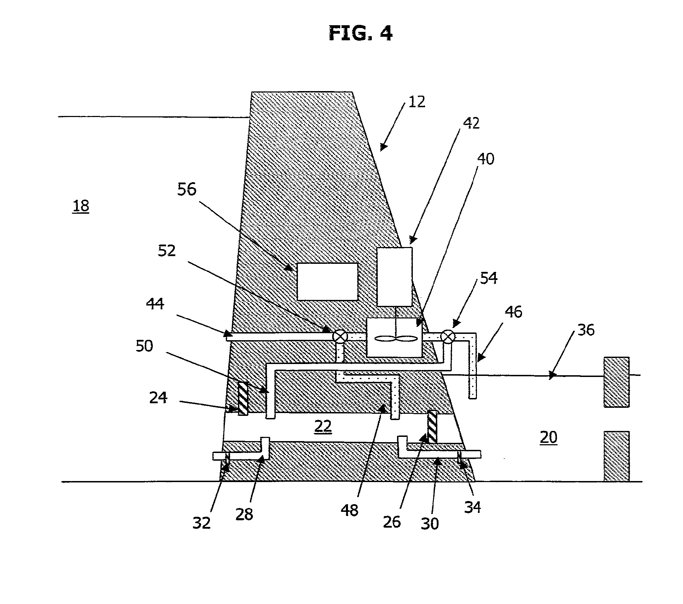

In Fig. 4 ist der dritte Betriebszustand des Fischdurchlasses dargestellt. Im dritten Betriebszustand ist das erste Tor 24 geöffnet und das zweite Tor 20 geschlossen. Die Turbine 40 ist über den zweiten Einlauf 48 mit der Kammer 22 und über den ersten Ablauf 46 mit dem Einstiegsbecken 36 verbunden. Durch den Wasserdruck auf der Oberwasserseite 18 wird der Durchlassabfluss über die Kammer 22 und den zweiten Einlauf 48 zur Turbine 40 gedrückt und fließt von dort über den ersten Ablauf 46 in das Einstiegsbecken 36. Da das Wasser über die Kammer 22 zur Turbine 40 fließt, wird den Fischen in der Kammer 22 eine Strömung bereitgestellt. Diese Strömung bewirkt, dass die Fische aus der Kammer 22 zur Oberwasserseite 18 des Absperrbauwerks 12 oder von der Oberwasserseite 18 in die Kammer 22 gelockt werden. Gleichzeitig kann der Durchlassabfluss zur Energieerzeugung genutzt werden.

Die Steuereinheit 56 kann den Fischdurchlass von dem dritten Betriebszustand in einen vierten Betriebszustand überführen. Dazu kann die Steuereinheit 56 das erste Tor 24 und die erste Schalteinheit 52 derart ansteuern, dass sich das erste Tor 24 schließt und die erste Schalteinheit 52 den ersten Einlauf 44 freigibt und den zweiten Einlauf 48 sperrt. Zudem wird der Schieber 34 der Druckabbauleitung 30 geöffnet.

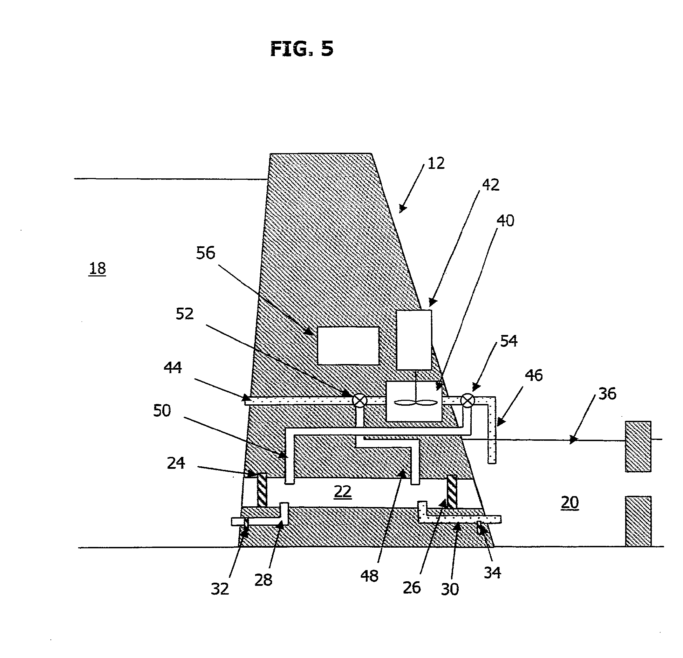

In Fig. 5 ist der vierter Betriebszustand des Fischdurchlasses dargestellt. Im vierten Betriebszustand sind das erste und das zweite Tor 24, 26 geschlossen. Die Turbine 40 ist - wie im zweiten Betriebszustand - über den ersten Einlauf 44 mit der Oberwasserseite 18 und über den ersten Ablauf 46 mit der Unterwasserseite 20 verbunden. Somit treibt der Durchlassabfluss die Turbine 40 an und erzeugt eine Strömung, die Fische in das Einstiegsbecken 36 lockt. Über die Druckabbauleitung 30 ist die Kammer 22 mit dem Einstiegsbecken 36 verbunden, so dass die Druckdifferenz zwischen der Kammer 22 und dem Einstiegsbecken 36 langsam abgebaut wird. Dabei sinkt der Wasserstand in dem vertikalen Rohr 33. Die Druckänderungsgeschwindigkeit für den vierten Betriebszustand kann der Druckänderungsgeschwindigkeit des zweiten Betriebszustands entsprechen.

Sobald in der Kammer 22 das gleiche Druckniveau herrscht wie im Einstiegsbecken 36, kann die Steuereinheit 56 den Fischdurchlass wieder in den ersten Betriebszustand überführen. Dazu steuert die Steuereinheit 56 das zweite Tor 26 und die zweite Schalteinheit 54 an, dass sich das zweite Tor 24 öffnet und die zweite Schalteinheit 54 den zweiten Ablauf 50 freigibt und den ersten Ablauf 46 sperrt. Zudem wird der Schieber 34 der Druckabbauleitung 30 geschlossen.

Der durch den ersten und / oder zweiten Ablauf 46, 50 fließende Durchlassabfluss wird in dem Einstiegsbecken 36 wieder zusammengeführt, so dass im jedem Betriebszustand der gesamte Durchlassabfluss von dem Einstiegsbecken 36 zur Unterwasserseite abfließt. Somit kann fortlaufend eine Strömung bereitgestellt werden, die Fische in das Einstiegsbecken lockt. Zudem fließt der Durchlassabfluss in jedem Betriebszustand über die Turbine 40, so dass der Durchlassabfluss fortlaufend zur Energieerzeugung genutzt werden kann.

Die Dauer der einzelnen Betriebszustände hängt von der örtlichen Fischpopulation ab und kann in einem Monitoring-Verfahren ermittelt werden.

In Fig. 6 ist ein weiteres Ausführungsbeispiel des Fischdurchlasses dargestellt. Der in Fig. 6 dargestellte Fischdurchlass ist separat von dem Absperrbauwerk 12 angeordnet. Neben den bereits in Verbindung mit Fig. 2 beschriebenen Komponenten umfasst der in Fig. 6 dargestellte Fischdurchlass einen Aufstiegsschacht 60 und einen Verbindungskanal 62 zur Oberwasserseite 18. Der in Fig. 6 dargestellte Aufstiegsschacht 60 ist schräg angeordnet und gleicht die Höhendifferenz zwischen der unterhalb der Wasseroberfläche der Unterwasserseite 20 angeordneten Kammer 22 und der Oberwasserseite 18 aus. Der Aufstiegsschacht kann zum Beispiel eine Steigung aufweisen, die in einem Bereich von 0° bis 45° liegt. Neben einer schrägen Anordnung kann der Aufstiegsschacht zum Beispiel auch vertikal angeordnet sein. Zudem kann der Verlauf des Aufstiegsschachts 60 an den Geländeverlauf angepasst sein. Unabhängig von der Anordnung kann der Aufstiegsschacht 60 im Wesentlichen rohrförmig sein. Der Verbindungskanal 62 kann zum Beispiel eine nach oben offene Wanne sein. Aufstiegsschacht 60 und Verbindungskanal 62 sind beim Betrieb des Fischdurchlasses mit Wasser gefüllt. Auch die Kammer 22 ist beim Betrieb des Fischdurchlasses vollständig mit Wasser gefüllt.

Neben der in Fig. 6 dargestellten Anordnung sind noch weitere Anordnungen möglich. So kann zum Beispiel das erste Tor 24 auch in der Mitte des Aufstiegsschachts 60 oder am oberen Ende des Aufstiegsschachts 60 angeordnet sein. Zudem kann der erste Einlauf 44 auch derart angeordnet sein, dass dieser nicht das Absperrbauwerk 12 durchbricht und im Bereich des Absperrbauwerks 12 in die Oberwasserseite mündet, sondern in den Aufstiegsschacht 60 mündet.

Die Kammer 22 des Fischdurchlasses kann in einen Grundablass oder in eine aufgelassene Turbinenkammer eines Absperrbauwerks 12 eingebaut werden. Zudem kann die Kammer 22 separat von dem Absperrbauwerk 12 angeordnet werden. Daher kann der Fischdurchlass einfach an bestehenden Absperrbauwerken nachgerüstet werden. Ein Aspekt des Fischdurchlasses besteht darin, einen Bausatz zum Nachrüsten eines Absperrbauwerks bereitzustellen. In dem Bausatz wird der Fischdurchlass derart dimensioniert, dass mindestens ein für den Betrieb des Fischdurchlasses bereitzustellender Durchlassabfluss über den Fischdurchlass abfließen kann. Die Turbine 40 ist so ausgelegt, dass der über die Turbine 40 fließende Volumenstrom in etwa dem Durchlassabfluss entspricht. Der Bausatz umfasst zudem zumindest eine Schalteinheit, die dazu eingerichtet ist, einen Einlauf oder Ablauf wahlweise kontrolliert freizugeben oder zu sperren. Der Bausatz zum Nachrüsten eines Absperrbauwerks kann zudem eine Steuereinheit 56 umfassen, die dazu eingerichtet ist, Steuerbefehle auszugeben, die Schaltzustandsänderungen der Schalteinheiten 52, 54 oder der Tore 24, 26 bewirken. Die von der Steuereinheit 56 vorgegebenen Schaltzustände entsprechen dabei den in den Fig. 2 - 5 dargestellten Betriebszuständen.

Eine Kammer oder Kammerelemente können weitere Elemente des Bausatzes sein. Der Boden in der Kammer kann dazu eingerichtet sein, ein Sohlsubstrat aufzunehmen. Zum Beispiel können auf dem Boden Rippen angeordnet sein. Die Rippen können Steine, die in der Kammer platziert werden, fixieren. In einem weiteren Beispiel kann der Boden der Kammer dazu eingerichtet sein, eine Betonschicht aufzunehmen. Die Betonschicht kann Steine, die in der Kammer platziert werden, fixieren. Die in der Kammer zu platzierenden Steine können eine Größe von ungefähr 5 cm bis 50 cm aufweisen.

Der Bausatz kann zudem einen in der Kammer 22 anzubringenden Einlaufabschnitt 74 und / oder einen in der Kammer anzubringenden Ablaufabschnitt 76 umfassen. Der Einlaufabschnitt 74 und der Ablaufabschnitt 76 sind in Fig. 7 dargestellt. Der Einlaufabschnitt 74 und / oder der Ablaufabschnitt 76 können im Wesentlichen kastenförmig sein. Der Einlaufabschnitt 74 und / oder der Ablaufabschnitt 76 weisen zumindest zwei Öffnungen auf. An der ersten Öffnung ist die Reinigungseinheit 51 angeordnet. Die zweite Öffnung verbindet den Einlauf- und Ablaufabschnitt 74, 76 mit weiteren Abschnitten des zweiten Einlaufs 48 oder des zweiten Ablaufs 50. Dadurch kann das aus der Kammer 22 in den Einlaufabschnitt 74 fließende Wasser zur Turbine 40 geleitet werden und das von der Turbine 40 abfließende Wasser über den Ablaufabschnitt 76 in die Kammer 22 geleitet werden. Der Querschnitt der ersten Öffnung ist im Wesentlichen quadratisch. Der Querschnitt der zweiten Öffnung ist im Wesentlichen rund. Die erste Öffnung und die an der ersten Öffnung angebrachte Reinigungseinheit kann dazu eingerichtet sein, dass der im Bereich der Reinigungseinheit 51b in den Einlaufabschnitt fließende Durchlassabfluss und / oder der im Bereich der Reinigungseinheit 51d aus dem Ablaufabschnitt fließende Durchlassabfluss eine Strömungsgeschwindigkeit von weniger als 2 m/s aufweist. In einem speziellen Ausführungsbespiel können die erste Öffnung und die Reinigungseinheiten 51b, 51d so dimensioniert sein, das der Durchlassabfluss im Bereich der Reinigungseinheiten 51b, 51d eine Strömungsgeschwindigkeit von weniger als 0,75 m/s aufweist.

Ferner kann der Bausatz einen zur Turbine passenden Generator, Rohre für den ersten und den zweiten Einlauf, Rohre für den ersten und zweiten Ablauf und / oder erste und zweite Tore umfassen.

Die vorangehend beschriebenen Varianten der Vorrichtung dienen lediglich dem besseren Verständnis der Struktur, der Funktionsweise und der Eigenschaften der Vorrichtung; sie schränken die Offenbarung nicht etwa auf die Ausführungsbeispiele ein. Die Figuren sind teilweise schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches / welche in den Figuren oder im Text offenbart ist / sind, mit allen Ansprüchen, jedem Merkmal im Text und in den anderen Figuren, anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Vorrichtung zuzuschreiben sind. Dabei sind auch Kombinationen zwischen allen einzelnen Ausführungen im Text, das heißt in jedem Abschnitt der Beschreibung, in den Ansprüchen und auch Kombinationen zwischen unterschiedlichen Varianten im Text, in den Ansprüchen und den Figuren umfasst.

Auch die Ansprüche limitieren nicht die Offenbarung und damit die Kombinationsmöglichkeiten aller aufgezeigten Merkmale untereinander. Alle offenbarten Merkmale sind explizit sowohl einzeln als auch in Kombination mit allen anderen Merkmalen hier offenbart.

## Patentansprüche

1. Fischdurchlass eines Absperrbauwerks (12) in einem Fließgewässer mit:
- einer Kammer (22), die eine erste und eine zweite verschließbare Öffnung aufweist, wobei die erste verschließbare Öffnung die Kammer (22) mit einer Oberwasserseite (18) des Absperrbauwerks (12) verbindet und die zweite verschließbare Öffnung die Kammer (22) mit einer Unterwasserseite (20) des Absperrbauwerks (12) verbindet;
- einer Turbine (40) mit einem Einlass (40a) und einem Auslass (40b);
- einem ersten Einlauf (44), der die Oberwasserseite (18) mit dem Einlass (40a) der Turbine (40) verbindet;
- einem ersten Ablauf (46), der den Auslass (40b) der Turbine (40) mit der Unterwasserseite (20) verbindet;
**gekennzeichnet durch**
- einem zweiten Einlauf (48), der die Kammer (22) mit dem Einlass (40a) der Turbine (40) verbindet; und
- einer ersten Schalteinheit (52), die dazu eingerichtet ist, den zweiten Einlauf (48) wahlweise kontrolliert freizugeben und zu sperren.

2. Fischdurchlass nach Anspruch 1, mit einem zweiten Ablauf (50), der den Auslass (40b) der Turbine (40) mit der Kammer (22) verbindet, und einer zweiten Schalteinheit (54), die dazu eingerichtet ist, den zweiten Ablauf (50) wahlweise kontrolliert freizugeben und zu sperren.

3. Fischdurchlass nach Anspruch 1 oder 2, wobei die erste Schalteinheit (52) zumindest einen Absperrschieber umfasst, wobei der zumindest eine Absperrschieber wahlweise den ersten Einlauf (44) oder den zweiten Einlauf (48) sperrt und / oder die zweite Schalteinheit (54) zumindest einen Absperrschieber umfasst, wobei der zumindest eine Absperrschieber wahlweise den ersten Ablauf (46) oder den zweiten Ablauf (50) sperrt.

4. Fischdurchlass nach den Ansprüche 2 oder 3, mit einer Steuereinheit (56), die dazu eingerichtet ist, der ersten und zweiten verschließbaren Öffnung und der ersten und zweiten Schalteinheit (52, 54) Schaltzustände vorzugeben.

5. Fischdurchlass nach Anspruch 4, wobei die von der Steuereinheit (56) vorgegebenen Schaltzustände Betriebszustände definieren, und wobei
- in einem ersten Betriebszustand die erste verschließbare Öffnung geschlossen ist, die zweite verschließbare Öffnung geöffnet ist und der zweite Ablauf (50) freigeben ist; und / oder
- in einem zweiten Betriebszustand und in einem vierten Betriebszustand die erste und zweite verschließbare Öffnung geschlossen sind und der erste Einlauf (44) sowie der erste Ablauf (46) freigegeben sind; und / oder
- in einem dritten Betriebszustand die erste verschließbare Öffnung geöffnet ist, die zweite verschließbare Öffnung geschlossen ist und der zweite Einlauf (48) freigegeben ist.

6. Fischdurchlass nach Anspruch 5, wobei die Steuereinheit (56) dazu eingerichtet ist, der ersten Schalteinheit (52) einen Schaltzustand vorzugeben, bei dem der erste Einlauf (44) gesperrt ist, wenn der zweite Einlauf (48) freigegeben ist; und / oder der zweiten Schalteinheit (54) einen Schaltzustand vorzugeben, bei dem der erste Ablauf (46) gesperrt ist, wenn der zweite Ablauf (50) freigegeben ist.

7. Fischdurchlass nach Anspruch 5, wobei die Steuereinheit (56) dazu eingerichtet ist, im zweiten Betriebszustand einen ersten Schieber (32) einer Druckaufbauleitung (28) einen Öffnungszustand vorzugeben, um eine Druckdifferenz zwischen der Kammer (22) und der Oberwasserseite (18) kontrolliert auszugleichen; und / oder im vierten Betriebszustand einen zweiten Schieber (34) einer Druckabbauleitung (30) einen Öffnungszustand vorzugeben, um eine Druckdifferenz zwischen der Kammer (22) und der Unterwasserseite (20) kontrolliert auszugleichen.

8. Fischdurchlass nach einem der vorhergehenden Ansprüche, wobei die Kammer (22) in einem Grundablass oder in einer aufgelassenen Turbinenkammer des Absperrbauwerks (12) angeordnet ist.

9. Wasserkraftwerk (14) mit
- einem ein Fließgewässer stauendes Absperrbauwerk (12);
- zumindest einer Hauptturbine (16); und
- einem der zumindest einen Hauptturbine (16) zugeordneten Generator (17), wobei das Wasserkraftwerk (14) einen in den vorhergehenden Ansprüchen definierten Fischdurchlass umfasst.

10. Verfahren zum Betreiben eines Fischdurchlasses eines Absperrbauwerks in einem Fließgewässer, wobei
- in einem ersten Betriebszustand ein Durchlassabfluss von einer Oberwasserseite eines Absperrbauwerks über eine Turbine in eine Kammer des Fischdurchlasses geleitet wird;
- in einem zweiten und in einem vierten Betriebszustand der Durchlassabfluss von der Oberwasserseite über die Turbine zu einer Unterwasserseite des Absperrbauwerks geleitet wird;
**dadurch gekennzeichnet, dass**
- in einem dritten Betriebszustand der Durchlassabfluss von der Kammer über die Turbine zur Unterwasserseite geleitet wird.

11. Verfahren nach Anspruch 10, wobei
- im ersten Betriebszustand die Kammer mit der Unterwasserseite verbunden ist; und / oder
- im zweiten Betriebszustand in der Kammer ein Druckaufbau erfolgt; und / oder
- im dritten Betriebszustand die Kammer mit der Oberwasserseite verbunden ist; und / oder
- im vierten Betriebszustand in der Kammer ein Druckabbau erfolgt.

12. Bausatz zum Nachrüsten eines Absperrbauwerks (12) in einem Fließgewässer, mit
- einer Kammer (22), die eine erste und eine zweite verschließbare Öffnung aufweist, wobei die erste verschließbare Öffnung die Kammer (22) mit einer Oberwasserseite (18) des Absperrbauwerks (12) verbindet und die zweite verschließbare Öffnung die Kammer (22) mit einer Unterwasserseite (20) des Absperrbauwerks (12) verbindet;
- einer Turbine (40) mit einem Einlass (40a) und einem Auslass (40b);
- einem ersten Einlauf (44), der die Oberwasserseite (18) mit dem Einlass (40a) der Turbine (40) verbindet;
- einem ersten Ablauf (46), der den Auslass (40b) der Turbine (40) mit der Unterwasserseite (20) verbindet;
- einem zweiten Einlauf (48), der die Kammer (22) mit dem Einlass (40a) der Turbine (40) verbindet; und
- einer ersten Schalteinheit (52), die dazu eingerichtet ist, den zweiten Einlauf (48) wahlweise kontrolliert freizugeben und zu sperren, wobei
- die Turbine (40) für einen Volumenstrom ausgelegt ist, der dem bereitzustellenden Durchlassabfluss entspricht; und wobei
- die erste und eine zweite Schalteinheit (52, 54) dazu eingerichtet sind, den Einlauf (44, 48) oder Ablauf (46, 50) wahlweise kontrolliert freizugeben oder zu sperren.

13. Bausatz nach Anspruch 12, mit
- einer Steuereinheit (56), die dazu eingerichtet ist, der ersten und zweiten Schalteinheit (52, 54) und einer ersten und einer zweiten verschließbaren Öffnung Schaltzustände vorzugeben, wobei die durch die Steuereinheit (56) vorgegebenen Schaltzustände den in den Ansprüchen 10 oder 11 definierten Betriebszuständen entsprechen; und / oder
- einer Kammer, deren Boden dazu eingerichtet ist, ein Sohlsubstrat in der Kammer zu fixieren; und / oder
- einer Kammer, die dazu eingerichtet ist, in einem Grundablass oder einer aufgelassenen Turbinenkammer eines Absperrbauwerks angeordnet zu werden; und / oder
- einem in einer Kammer anzubringenden Einlaufabschnitt, der zumindest zwei Öffnungen umfasst, wobei an einer Öffnung eine Reinigungseinheit (51) angeordnet ist; und / oder
- einem in einer Kammer anzubringenden Ablaufabschnitt, der zumindest zwei Öffnungen umfasst, wobei an einer Öffnung eine Reinigungseinheit (51) angeordnet ist.

## Claims

1. A fish passage of a barrier building (12) in a flowing water, comprising:
- a chamber (22) including a first and a second lockable opening, wherein the first lockable opening connects the chamber (22) with an upper water surface (18) of the barrier building (12) and the second lockable opening connects the chamber (22) to a lower water surface (20) of the barrier building (12);
- a turbine (40) with an inlet (40a) and an outlet (40b);
- a first intake (44) which connects the upper water surface (18) with the inlet (40a) of the turbine (40);
- a first discharge (46), which connects the outlet (40b) of the turbine (40) with the lower water surface (20);
**characterized by**
- a second intake (48) which connects the chamber (22) with the inlet (40a) of the turbine (40); and
- a first switching unit (52) which is adapted to optionally controllably release and block the second intake (48).

2. The fish passage according to claim 1, comprising a second discharge (50), which connects the outlet (40b) of the turbine (40) with the chamber (22), and a second switching unit (54), which is adapted to optionally controllably release and block the second discharge (50).

3. The fish passage according to claim 1 or claim 2, wherein the first switching unit (52) comprises at least one blocking slide, wherein the at least one blocking slide optionally blocks the first intake (44) or the second intake (48) and/or the second switching unit (54) comprises at least on blocking slide, wherein the at least one blocking slide optionally blocks the first discharge (46) or the second discharge (50).

4. The fish passage according to claim 2 or claim 3, comprising a control unit (56), which is adapted to predetermine switching conditions for the first and second lockable openings and the first and second switching units (52, 54).

5. The fish passage according to claim 4, wherein the switching conditions predetermined by the control unit (56) define operating states, and wherein
- in a first operating state, the first lockable opening is closed, the second lockable opening is opened and the second discharge (50) is released; and/or
- in a second operating state and in a fourth operating state, the first and second lockable openings are closed and the first intake (44) as well as the first discharge (46) are released; and/or
- in a third operating state, the first lockable opening is opened, the second lockable opening is closed and the second intake (48) is released.

6. The fish passage according to claim 5, wherein the control unit (56) is adapted to predetermine a switching condition for the first switching unit (52), wherein the first intake (44) is blocked if the second intake (48) is released; and/or a switching condition is predetermined for the second switching unit (54), wherein the first discharge (46) is blocked if the second discharge (50) is released.

7. The fish passage according to claim 5, wherein the control unit (56) is adapted in the second operating state to define an opening condition for a first slide (32) of a pressure build-up conduit (28), in order to controllably balance the pressure difference between the chamber (22) and the upper water surface (18); and/or, in the fourth operating state, to define an opening condition for a second slide (34) of a pressure build-up conduit (30) in order to balance a pressure difference between the chamber (22) and the lower water surface (20).

8. The fish passage according to any one of the preceding claims, wherein the chamber (22) is arranged in a bottom discharge or in an abandoned turbine chamber of the barrier building (12).

9. A hydroelectric power plant (14) comprising
- a barrier building (12) impounding a flowing water;
- at least one main turbine (16); and
- a generator assigned to the at least one main turbine (16), wherein the hydroelectric power plant (14) comprises a fish passage defined in the preceding claims.

10. A method for operating a fish passage of a barrier building in a flowing water, wherein
- in a first operating state, a passage discharge is lead from an upper water surface of a barrier building via a turbine into a chamber of the fish passage;
- in a second and in a fourth operating state, the passage discharge is lead from the upper water surface via the turbine to a lower water surface of the barrier building;
**characterized in that**
- in a third operating state, the passage discharge is lead from the chamber via the turbine to the lower water surface.

11. The method according to claim 10, wherein
- in the first operating state, the chamber is connected with the lower water surface; and/or
- in the second operating state, pressure is built up in the chamber; and/or
- in the third operating state, the chamber is connected with the upper water surface; and/or
- in the fourth operating state, pressure is reduced in the chamber.

12. A construction kit for retrofitting a barrier building (12) in a flowing water, comprising
- a chamber (22) which comprises a first and a second lockable opening, wherein the first lockable opening connects the chamber (22) with an upper water surface (18) of the barrier building (12) and the second lockable opening connects the chamber (22) with a lower water surface (20) of the barrier building (12);
- a turbine (40) with an inlet (40a) and an outlet (40b);
- a first intake (44) which connects the upper water surface (18) with the inlet (40a) of the turbine (40);
- a first discharge (46), which connects the outlet (40b) of the turbine (40) with the lower water surface (20);
- a second intake (48) which connects the chamber (22) with the inlet (40a) of the turbine; and
- a first switching unit (52) which is adapted to optionally controllably release and block the second intake (48), wherein
- the turbine (40) is dimensioned for a volume flow rate which corresponds to the passage discharge to be provided; and wherein
- the first and a second switching unit (52, 54) are adapted to optionally controllably release or block the second intake (44, 48).

13. The construction kit according to claim 12, comprising
- a control unit (56), which is adapted to predetermine switching conditions for the first and second switching unit (52, 54) and a first and a second lockable opening, wherein the switching conditions predetermined by the control unit (56) correspond to the operating states defined in claim 10 or claim 11; and/or
- a chamber whose bottom is adapted to retain a bed substrate in the chamber; and/or
- a chamber which is adapted to be arranged in a bottom discharge or an abandoned turbine chamber of a barrier building; and/or
- an intake portion to be provided in a chamber, which has at least two openings, wherein at one opening a cleaning unit (51) is mounted; and/or
- a discharge portion to be provided in a chamber, which has at least two openings, wherein at one opening a cleaning unit (51) is mounted.

## Revendications

1. Passe à poissons ménagée dans un ouvrage de retenue (12) construit dans un cours d'eau, comportant :
- une chambre (22) qui présente une première et une deuxième ouverture obturable, la première ouverture obturable reliant ladite chambre (12) à un côté amont de l'ouvrage de retenue (12), et ladite deuxième ouverture obturable reliant la chambre (12) à un côté aval (20) de l'ouvrage de retenue (12),
- une turbine (40) pourvue d'une entrée (40a) et d'une sortie (40b),
- une première prise d'eau (44) qui relie le côté amont (18) à l'entrée (40a) de la turbine (40),
- une première évacuation d'eau (46) qui relie la sortie (40b) de la turbine (40) au côté aval (20),
**caractérisé par**
- une deuxième prise d'eau (48) qui relie la chambre (22) à l'entrée (40a) de la turbine (40), et
- une première unité de commutation (52) qui est conçue pour libérer ou bloquer de manière sélective et contrôlée la deuxième prise d'eau (48).

2. Passe à poissons selon la revendication 1, comportant une deuxième évacuation d'eau (50) qui relie la sortie (40b) de la turbine (40) à la chambre (22), et une deuxième unité de commutation (54) qui est conçue pour libérer ou bloquer de manière sélective et contrôlée la deuxième prise d'eau (50)

3. Passe à poissons selon la revendication 1 ou 2, la première unité de commutation (52) comportant au moins une vanne d'arrêt, ladite au moins une vanne d'arrêt bloquant sélectivement la première prise d'eau (44) ou la deuxième prise d'eau (48) et / ou la deuxième unité de commutation (54) comportant au moins une vanne d'arrêt, ladite au moins une vanne d'arrêt bloquant sélectivement la première évacuation d'eau (46) ou la deuxième évacuation d'eau (50).

4. Passe à poissons selon la revendication 2 ou 3, comportant une unité de commande (56) qui est conçue pour définir des états de commutation pour la première et la deuxième ouverture obturable ainsi que pour la première et la deuxième unité de commutation (52, 54).

5. Passe à poissons selon la revendication 4, les états de commutation définis par l'unité de commande (56) définissant des états de fonctionnement,
- un premier état de fonctionnement étant **caractérisé par le fait que** la première ouverture obturable est fermée, la deuxième ouverture obturable ouverte et la deuxième évacuation d'eau (50) libérée, et / ou
- un deuxième état de fonctionnement et un quatrième état de fonctionnement étant **caractérisés par le fait que** la première et la deuxième ouverture obturable sont fermées, et la première prise d'eau (44) et la première évacuation d'eau (46) libérées, et / ou
- un troisième état de fonctionnement étant **caractérisé par le fait que** la première ouverture obturable est ouverte, la deuxième ouverture obturable fermée et la deuxième prise d'eau (49) libérée.

6. Passe à poissons selon la revendication 5, l'unité de commande (56) étant conçue pour définir pour la première unité de commutation (52) un état de commutation dans le cadre duquel la première prise d'eau (44) est bloquée lorsque la deuxième prise d'eau (48) est libérée, et / ou pour définir pour la deuxième unité de commutation (54) un état de commutation dans le cadre duquel la première évacuation d'eau (46) est bloquée lorsque la deuxième évacuation d'eau (50) est libérée.

7. Passe à poissons selon la revendication 5, l'unité de commande (56) étant conçue pour définir, dans le deuxième état de fonctionnement, un état d'ouverture pour la première vanne (32) d'une conduite d'augmentation de pression afin de compenser de manière contrôlée une différence de pression entre la chambre (22) et le côté aval (20).

8. Passe à poissons selon l'une des revendications précédentes, la chambre (22) étant disposée dans une vidange de fond ou dans une chambre à turbine désaffectée de l'ouvrage de retenue (12).

9. Centrale hydraulique (14) comportant
- un ouvrage de retenue (12) construit dans un cours d'eau
- au moins une turbine principale (16), et
- au moins un générateur (17) associé à ladite au moins une turbine principale (16), la centrale hydraulique (14) comportant une passe à poissons selon les revendications précédentes.

10. Procédé de fonctionnement d'une passe à poissons ménagée dans un ouvrage de retenue construit dans un cours d'eau,
- un écoulement en provenance de la passe étant, dans un premier état de fonctionnement, amené depuis un côté amont d'un ouvrage de retenue, via la turbine, dans une chambre de la passe à poissons,
- l'écoulement en provenance de la passe étant, dans un deuxième et un quatrième état de fonctionnement, dirigé via la turbine vers un côté aval de l'ouvrage de retenue,
**caractérisé en ce que**
- l'écoulement provenant de la passe est, dans un troisième état de fonctionnement, dirigé depuis la chambre, via la turbine, vers le côté aval.

11. Procédé selon la revendication 10,
- la chambre étant reliée au côté aval dans le premier état de fonctionnement, et / ou
- une pression étant créée à l'intérieur de la chambre dans le deuxième état de fonctionnement, et / ou
- la chambre étant reliée au côté amont dans le troisième état de fonctionnement, et / ou
- une décompression étant créée à l'intérieur de la chambre dans le quatrième état de fonctionnement.

12. Kit pour aménagement ultérieur d'un ouvrage de retenue (12) construit dans un cours d'eau, comportant
- une chambre (22) qui présente une première et une deuxième ouverture obturable, la première ouverture obturable reliant la chambre (12) à un côté amont de l'ouvrage de retenue (12), et la deuxième ouverture obturable reliant la chambre (12) à un côté aval (20) de l'ouvrage de retenue (12),
- une turbine (40) pourvue d'une entrée (40a) et d'une sortie (40b),
- une première prise d'eau (44) qui relie le côté amont (18) à l'entrée (40a) de la turbine (40),
- une première évacuation d'eau (46) qui relie la sortie (40b) de la turbine (40) au côté aval (20),
- une deuxième prise d'eau (48) qui relie la chambre (22) à l'entrée (40a) de la turbine (40),
- une première unité de commutation (52) qui est conçue pour libérer ou bloquer de manière sélective et contrôlée la deuxième prise d'eau (48),
- la turbine (40) étant conçue pour un débit volumétrique qui correspond à l'écoulement provenant de la passe, et
- la première et la deuxième unité de commutation (52, 54) étant conçues pour libérer ou bloquer de manière sélective et contrôlée la prise d'eau (44, 48) ou l'évacuation d'eau (46, 50).

13. Kit selon la revendication 12, comportant
- une unité de commande (56) qui est conçue pour définir des états de commutation pour la première et la deuxième ouverture obturable ainsi que pour la première et à la deuxième unité de commutation (52, 54), ces états de commutation définis par l'unité de commande (56) correspondant aux états de fonctionnements définis dans les revendications 10 et 11, et / ou
- une chambre dont le fond est conçu pour fixer un substrat de lit à l'intérieur de la chambre, et / ou
- une chambre qui est conçue pour être placée dans une vidange de fond ou dans une chambre à turbine désaffectée d'un ouvrage de retenue, et / ou
- un tronçon de prise d'eau à placer dans une chambre, lequel comporte au moins deux ouvertures, une unité de nettoyage (51) étant agencée sur une ouverture, et / ou
- un tronçon d'évacuation d'eau à placer dans une chambre, lequel comporte au moins deux ouvertures, une unité de nettoyage (51) étant agencée sur une ouverture.
